# EUROPÄISCHE PATENTANMELDUNG

(11) **EP 2 955 202 A1**
(43) Veröffentlichungstag der Anmeldung: **16.12.2015**
(21) Anmeldenummer: 14172361.9
(22) Anmeldetag: 13.06.2014
(51) Int. Cl.: C08K 5/372, C08L 95/00

(54) **Verfahren zur Adhäsionsverbesserung zwischen Bitumen und Gestein im Asphalt**

(71) Anmelder: Rhein Chemie Rheinau GmbH, 68219 Mannheim (DE)
(72) Erfinder: Klein, Thomas, 69126 Heidelberg (DE); Ziser, Torsten, 69488 Birkenau (DE)
(74) Vertreter: Siegers, Britta

(57) **Zusammenfassung**

Gegenstand der vorliegenden Erfindung ist ein Verfahren zur Adhäsionsverbesserung zwischen Bitumen und Gestein im Asphalt.

## Beschreibung

Gegenstand der vorliegenden Erfindung ist ein Verfahren zur Adhäsionsverbesserung zwischen Bitumen und Gestein im Asphalt.

Straßenbeläge (Asphalt) bestehen im Wesentlichen aus den beiden Komponenten Bitumen und Gestein. Die Funktion des Bitumens, das etwa 4-7% des Straßenbelags ausmacht, ist die eines Bindemittels für das Gesteinsgerüst. Durch dieses Bindemittel bekommt Asphalt inneren Zusammenhalt. Es ist daher von hoher Bedeutung, dass das Bitumen mit hoher Bindungskraft an der Gesteinsoberfläche haftet.

Während Bitumen eher hydrophob ist, sind für die Gesteinszuschläge eher hydrophile Oberflächen typisch. Das bedeutet, dass langfristig das Bitumen an der Gesteinsoberfläche durch Wasser verdrängt werden kann. Die Gesteinszuschläge selbst sind polar mit anionischer (bei hohem Silikatanteil wie z.B. Quarzit, Basalt oder Sandstein) oder kationischer Prägung (z. B. Marmor, Kalk). Insbesondere Bitumen, die einen relativ hohen Anteil von sauren Gruppen haben (d. h. eine anionische Prägung haben), zeigen eine geringe Adhäsion zu anionischen Zuschlägen.

Die Straßenschäden durch Wassereinwirkung sind ein allgemein bekanntes Phänomen. Dazu gehören Spurrillen-(Spurrinnen-)bildung, Verformung, Abplatzen und Zerbröckeln. Die Oberfläche wird rauer, die strukturelle Festigkeit nimmt ab, die Empfindlichkeit gegenüber Frost-Tau-Wechseln steigt und es können sich sogar Schlaglöcher bilden. Auf Mikroebene besteht das Problem in einem Verlust an Adhäsion zwischen dem Bitumen und der Gesteinsoberfläche. Auch wenn das Gestein von Bitumen bedeckt ist, kann Wasser den Bitumenfilm durchdringen.

Der Eintritt von Wasser in Asphaltschichten kann auf mannigfaltige Weise erfolgen, beispielsweise durch Risse oder poröse Stellen im Straßenbelag, Verschleiß von dünnen Bitumenfilmen an scharfen Gesteinskanten, aufsteigendes Wasser durch Kapillarkräfte sowie durch Einpressen durch die Last vor dem rollenden Reifen sowie absaugende Wirkung nach dem Reifen. Allgemein begünstigen Salze den Wassereintritt.

Ein Adhäsionsverbesserer kehrt typischerweise die Polarität von inkompatiblen Oberflächen so um, dass sich eine Bindekraft zwischen Bitumen und Gesteinszuschlag und damit eine Verbesserung der Adhäsion ergibt. Die Kombination von steigendem Verkehrsaufkommen und stagnierenden oder sogar sinkenden Budgets für Straßeninstandhaltung lässt die Verwendung von Adhäsionspromotoren, die die Langzeitstabilität verbessern, notwendig erscheinen (z.T. national vorgeschrieben). Die Adhäsion von Bitumen ist dann besonders wichtig, wenn wie im Fall des offenporigen Asphalts ("Flüsterasphalt") grobe Gesteinskörnungen mit großen Hohlräumen durch relativ geringe Mengen an Bindemittel (Bitumen) miteinander verbunden sind. Die Hohlräume leiten das Regenwasser ab und absorbieren den Schall (Verkehrsgeräusche) bzw. lassen diesen erst gar nicht erst entstehen (durch Luftableitung). Dieser Effekt macht sich besonders bei Straßen bemerkbar, bei denen die Reifen-Fahrbahn-Geräusche die Hauptgeräuschquelle darstellen, wie z.B. bei Autobahnen.

Die Verbesserung der Adhäsion von Bitumen an Gestein kann durch verschiedene Maßnahmen erfolgen, beispielsweise durch Verwendung von Bitumen höherer Viskosität, gelöschtem Kalk oder oberflächenaktive Substanzen (s. The Shell Bitumen Handbook, 5th Ed. 2003, p. 185- 187ff).

Gelöschter Kalk erfordert eine Dosierung von 1-3 Gew.% bezogen auf Bitumen, um das Haftvermögen zu verbessern. Es wird eine Brückenbildung durch Calciumionen zwischen negativ geladenen Gruppen im Bitumen (Carboxylatgruppen) und der Steinoberfläche vermutet. Allerdings sind Calciumionen prinzipiell wasserlöslich und damit durch Wasser auswaschbar, so dass Risiken hinsichtlich der langfristigen Wirkung bestehen.

Die typischen Additive zur Haftverbesserung sind Fettamine in einer Dosierung von 0,1 bis 1 Gew.%. Hier wird die Wirkung durch Anziehung zwischen den (kationisch vorliegenden) Aminogruppen und der Oberfläche des Gesteins erklärt. Der Alkylrest verbleibt im Bitumen. Diese Amine können jedoch instabil sein bei Temperaturen, wie sie für Bitumenlagerung typisch sind.

Fettamine zeigen jedoch toxische und insbesondere stark ökotoxische Eigenschaften (s. Draft risk assessment on div. Fatty amines, BAUA, October 2008; Technical Bulletin AkzoNobel Adhesion Promoters, p18; Fatty Nitrogen Derived Amines Category, US HPV Chemicals Challenge Program, Assessment of Data, 2003 ). Die Verwendung als Additiv für Straßenasphalt muss als sogenannter "wide-dispersive use" als problematisch angesehen werden. In Europa werden im Rahmen des REACH- Programmes die im Markt eingesetzten Stoffe einer Risikobewertung unterzogen, wobei die Exposition der Umwelt oder des Menschen in Relation gesetzt wird zu dem Gefahrenpotenzial (Toxizität, Ökotoxizität). Wenn das Risiko als hoch angesehen wird (Risiko = Exposition X Gefährdung) sollte nach Alternativen gesucht werden.

Es stellte sich also die Aufgabe, umweltverträglichere Alternativen zu den kationischen Fettaminen oder auch dem gelöschten Kalk als Adhäsionsverbesserer zu finden, die die Nachteile des Standes der Technik nicht aufweisen.

Überraschenderweise zeigen bestimmte Alkylpolysulfide genau diese, die Adhäsion verbessernde Eigenschaft, obwohl sie gerade nicht kationische Strukturen wie die Fettamine ausbilden können. Im Gegensatz zu den Fettaminen und den daraus ableitbaren kationischen Strukturen zeigen die Alkylpolysulfide keine Aquatoxizität (s. Di-tert. Alkyl-polysulfides Category, US HPV Chemicals Challenge Program,Test Plan 2004; S. 22-23 und Alkylsulfides Category: US HPV Chemicals Challenge Program Screening Level Hazard Characterization, 2009, S. 4)

Gegenstand der vorliegenden Erfindung sind daher Verfahren zur Adhäsionsverbesse-rung zwischen Bitumen und Gestein im Asphalt, dadurch gekennzeichnet, dass Dialkylpolysulfide der allgemeinen Formel (1) 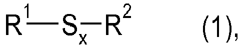 dem Bitumen und/oder Gestein zugegeben werden,
worin
R¹ und R² gleich oder verschieden sind und für einen linearen oder verzweigten C₁-C₁₈-Alkylrest stehen und x für die ganze Zahlen 3 bis 12 steht.

Bei Bitumen im Sinne der Erfindung handelt es sich um nahezu nicht flüchtiges, klebriges und abdichtendes erdölstämmiges Produkt, das auch in Naturasphalt vorkommt und das in Toluol vollständig löslich ist mit Siedepunkten > 525 °C. Bei Raumtemperatur ist es hochviskos oder nahezu fest und wird nach DIN EN 12591 klassifiziert.

Unterschieden wird dabei in Straßenbaubitumen, d.h. Bitumen zur Herstellung von Asphalt für den Bau und die Erhaltung von Verkehrsflächen. Dieser weist vorzugsweise eine Nadelpenetration bei 25 °C bis zu einem Höchstwert von 900 × 0,1 mm auf, wobei Weichbitumen, welches zur Herstellung von weichen Asphalten genutzt wird, und bei 60 °C eine Viskosität von kleiner oder gleich 16 000mm2/s aufweist.

Bei Gestein im Sinne der Erfindung handelt es sich vorzugsweise um natürliche Gesteinskörnungen, vorzugsweise gemäß DIN EN 13043, die vorzugsweise einer mechanischen Aufbereitung, wie beispielsweise Brechen und Absieben, unterzogen worden sind.

Das als sog. Lockergestein in der Natur vorkommende Gestein ist beispielsweise Sand oder Kies oder dieser wird aus Festgestein in Steinbrüchen durch Brechen und Absieben in Lieferkörnungen gewonnen.

Gesteinskörnungen, die für Asphaltmischgut für den Bau von Verkehrsflächen eingesetzt werden, müssen den Anforderungen der DIN EN 13043 bzw. der TL Gestein-StB 04 entsprechen. Asphaltdeckschichtmischgut besteht aus Gesteinskörnungen bis zu einem Größtkorn von 16 mm.

Die Gesteine liegen entweder in ungebrochener Form (als Rundkorn), vorzugsweise Kies, Sand, Schlotter und Splitt. oder in gebrochener Form vor.

Die Anforderungen an Gesteinskörnungen werden unter anderem in der DIN 18196 Bodenklassifikation für bautechnische Zwecke und den Technischen Lieferbedingungen für Gesteinskörnung im Straßenbau, TL Gestein-StB, Ausgabe 2004 (S. 11) definiert.

Bei Asphalt im Sinne der Erfindung handelt es sich um eine natürliche oder technisch hergestellte Mischung enthaltend Bitumen und Gestein (Gesteinskörnungen). Diese wird im Straßenbau für Fahrbahnbefestigungen, im Hochbau für Bodenbeläge, im Wasserbau und im Deponiebau zur Abdichtung verwendet. Das Mischungsverhältnis liegt bei vorzugsweise 90-95 Gew.-% Gestein/ Gesteinskörnung und ca. 5-10 Gew.-% Bitumen, dieses Verhältnis kann jedoch nach oben oder unten geringfügig verändert werden. Die beigegebene Menge (sogenannter Bindemittelgehalt) und die Härte (also die Bindemittelsorte) des Bitumens verändern das Materialverhalten wesentlich.

Bei den in dem erfindungsgemäßen Verfahren eingesetzten Dialkylpolysulfiden handelt es sich um Verbindungen der allgemeinen Formel (1), 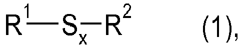 worin
R¹ und R² gleich oder verschieden sind und einen linearen oder verzweigten C1-C18-Alkylrest stehen und x für die ganzen Zahlen 3 bis 8 steht.

Darüber hinaus ist es weiter bevorzugt, wenn als Dialkylpolysulfide solche eingesetzt werden, in denen R1 und R2 in der allgemeinen Formel (1) für lineare oder verzweigte C5- bis C15-Alkylreste stehen.

Ebenfalls bevorzugt ist, wenn als Dialkylpolysulfide solche eingesetzt werden, in denen x in der allgemeinen Formel (1) die Zahlen 3 bis 5 steht und R1 bis R3 in der allgemeinen Formel lineare oder verzweigte C₅- bis C₁₅- Alkylreste stehen.

Als Dialkylpolysulfide bevorzugt sind Dioctylpentasulfid und/oder Dioctyltetrasulfid, besonders bevorzugt verzweigte Dioctylpentasulfide oder Dioctyltetrasulfide.

Bei den vorgenannten Dialkylpolysulfiden handelt es sich um kommerziell verfügbare Produkte, so z.B. Additin® RC 2540, welches bei der Rhein Chemie Rheinau GmbH erhältlich ist.

Die Dialkylpolysulfide können sowohl einzeln als auch in beliebiger Abmischung untereinander in dem erfindungsgemäßen Verfahren eingesetzt werden.

Üblicherweise werden die Dialkylpolysulfide in Mengen von 0,1 und 3% Gew.-%, bevorzugt 0,5 bis 1 Gew.-%, jeweils bezogen auf die Summe der Bestandteile des Asphalts (Gesamtmischung), eingesetzt.

In einer besonderen Ausführungsform des erfindungsgemäßen Verfahrens werden die Dialkylpolysulfide in mindestens einem mineralischem Öl gelöst eingesetzt. Dabei ist es bevorzugt, wenn das Verhältnis von Öl zu Dialkylpolysulfid 9:1 bis 3:7, vorzugsweise 7:3 bis 1:1 beträgt. Als Öle im Sinne der Erfindung können dabei eingesetzt werden naphtenische Öle, wie beispielsweise das naphtenische "Nynas T 22" oder paraffinbasische Raffinate, die auch unter dem Begriff RAE (Residual Aromatic Extract) gemäß EU Substanz Richtlinie bekannt sind, wie etwa das Prozess-und Weichmacheröl "Shell Flevex 595".

In einer weiteren Ausführungsform der vorliegenden Erfindung werden zusätzlich Gummigranulate eingemischt.

Gummigranulate im Sinne der Erfindung sind dabei vorzugsweise aus zerkleinerten/geschredderten Reifen, vorzugsweise aus Altreifen gewonnene Granulate. Die Gummigranulate weisen vorzugsweise Teilchengröße von 0,01 mm bis 4 mm, bevorzugt von 0,2 bis 4 mm auf.

Diese Granulate werden dabei vorzugsweise aus LKW-Reifen oder aus einer Mischung von PKW und LKW-Reifen gewonnen. Der LKW-Anteil bevorzugt dabei die Bildung eines einheitlichen Produktes. Der Kautschukanteil und damit der Weichheitsgrad von PKW-Reifen mit Sommer- und Winterreifen ist stark unterschiedlich, bei LKW-Reifen bleibt die Qualität relativ einheitlich, deshalb ist ihre Verarbeitung bevorzugt.

Üblicherweise werden die Gummigranulate in Mengen von 5 bis 20 Gew.-%, bevorzugt 5 bis 15 Gew.-%, jeweils bezogen auf den Asphalt, eingesetzt.

Bei den Granulaten handelt es sich vorzugsweise um vernetzte Kautschuke auf Basis von Polydienen der R-Gruppe, umfassend Naturkautschuke (NR), Butadien-Kautschuke (BR), Styrol-Butadien-Kautschuke (SBR), Acrylnitril-Butadien-Kautschuke (NBR) und Butylkautschuke (IIR), um Vulkanisate aus Kautschuken mit doppelbindungsfreien oder nahezu doppelbindungsfreien, d.h. weniger als 15 mol-% Doppelbindungen enthaltender Monomere in den Polymerhauptketten aus der M-Gruppe, umfassend Ethylen-Propylen-Dien-Kautschuk (EPDM), und Mischungen aus den vorgenannten Kautschuken der R- und M-Gruppe.

In einer weiteren Ausführungsform des erfindungsgemäßen Verfahrens werden zusätzlich Thermoplaste, ausgewählt aus der Gruppe der Polyethylen (PE), Polypropylen (PP), insbesondere ataktisches Polypropylen (aPP), Polyvinylchlorid (PVC), Polystyrol (PS), Ethylen-Vinylacetat- (EVA), Ethylen-Methylacrylat- (EMA), Ethylen-Butylacrylat-Copolymer (EBA), Polyvinylchlorid (PVC), Polystyrol (PS) und/oder Thermoplastische Elastomere (TPE) wie vorzugsweise Styrol-Butadien-Styrol- (SBS), Styrol-Isopren-Styrol- (SIS), Styrol-Ethylen-Butadien-Styrol- (SEBS), Block-copolymere und/oder unvernetzte Kautschuke auf Basis von Polydienen, umfassend Naturkautschuke (NR), Butadien-Kautschuke (BR), Styrol-Butadien-Kautschuke (SBR), Acrylnitril-Butadien-Kautschuke (NBR), und Butylkautschuke (IIR), Isobuten-Isopren- (IIR)Ethylen-Propylen-Dien- (EPDM), Ethylen-Vinylacetat- (EVA) Kautschuk, Polyethylen-Bitumen- Copolymer (ECB), Polyoctenamer-Kautschuk (TOR), Isopren- (IR), Polychloropren- (CR), Acrylat- (ACM), Ethylen-Acrylester-Kautschuk (AEM), und/oder Duroplaste, wie vernetzte Polyepoxide (EP), Polyurethane (PUR) und Ungesättigte Polyester (UP), Phenolharze eingesetzt (J. Read, D. Whiteoak, Shell Bitumen Handbuch, 5th edition, Thomas Telford Publishing 2003, S. 65, eingesetzt.

Deren Anteil, bezogen auf die Mischungsbestandteile des Asphalts beträgt vorzugsweise 0,5 Gew.-% bis 10 Gew.-%.

Die in diesem Fall durch Zumischen von Gummigranulat und gegebenenfalls Thermoplasten erhaltenen Bitumen-Mischungen werden gummimodifizierte bzw. polymermodifizierte Bitumen nachfolgend genannt.

In einer weiteren Ausführungsform des erfindungsgemäßen Verfahrens werden weitere Additive, wie vorzugsweise Metallverbindungen/-salze, insbesondere organische Zinkverbindungen/-salze, wie vorzugsweise Zinksalze von Carbonsäuren, vorzugsweise Zinkseifen, wie vorzugsweise Zinksalze von Carbonsäuren mit 8 oder mehr Kohlenstoffatomen erhältlich als Additin® RC 4580 oder Zinknaphthenate, wie z.B. erhältlich als Additin® RC 4530 u.a. als Sulfidfänger und damit Geruchsverminderer, zudosiert.

Die Menge an zusätzlichen Additiven beträgt vorzugsweise bis zu 1 Gew.-%, besonders bevorzugt 0,1 bis 1 Gew.-%, bezogen auf den Asphalt.

In einer weiteren Ausführungsform des erfindungsgemäßen Verfahrens wird das Polysulfid vor der Zugabe in Öl, vorzugsweise in mineralischem Öl, besonders bevorzugt paraffinischen oder naphthenischem Öl, oder auch Bitumen mit Viskosität <1000 cSt, gemessen nach EN 13302 bei 60°C, gelöst.

Als Öle im Sinne der Erfindung können dabei eingesetzt werden etwa das naphtenische "Nynas T 22" oder paraffinbasische Raffinate, die auch unter dem Begriff RAE (Residual Aromatic Extract) gemäß EU Substanz Richtlinie bekannt sind, wie etwa das Prozess- und Weichmacheröl "Shell Flevex 595".

Das Verhältnis von Öl zu Dialkylpolysulfid beträgt vorzugsweise 9:1 bis 3:7, besonders bevorzugt 7:3 bis 1:1.

In dem erfindungsgemäßen Verfahren erfolgt das Zumischen der Dialkylpolysulfide der Formel (I) vorzugsweise zum Bitumen unter mechanischer Beanspruchung und danach wird das Gestein zugemischt. Dabei ist der Zeitpunkt der Zugabe der Dialkylpolysulfide frei wählbar. So können diese schon bei der Herstellung des gummi- bzw. polymermodifizierten Bitumens der Komponente Gummigranulat/ Polymer als Devulkanisierungsmittel zugegeben werden, oder sie können erst später der fertigen Mischung, dem fertigen gummi- bzw. polymermodifizierten Bitumen, zugegeben werden. In beiden Fällen erhält man eine signifikante Steigerung der Haftung bzw. der Affinität zwischen dem so modifizierten Bitumen und dem Gestein gegenüber einer Formulierung ohne Alkylpolysulfid, die in der Asphaltmischung ersichtlich ist.

Mechanische Beanspruchung im Sinne der Erfindung bedeutet den Einsatz von Mischaggregaten, wie vorzugsweise Extruder, Innenmischer, Hochdruckhomogenisatoren, wie vorzugsweise Hochschermischgeräte, wie vorzugsweise Ultra-Turrax®, Kneter und/oder Walzwerk. Im großtechnischen Bereich ist die Verwendung von Extrudern, vorzugsweise Doppelschneckenextruder oder Planetwalzenextruder,und/oder Innenmischern dabei besonders bevorzugt, wobei die Art des Extruders und/oder Innenmischers keiner besonderen Beschränkung unterliegt. Im Labormaßstab ist das Hochschermischgerät, z.B. ein Ultra-Turrax®, besonders bevorzugt.

Bei der Durchführung im Extruder erfolgt dies vorzugsweise bei einer hohen Scherung.

Im Fall des Einsatzes eines Innenmischers zur mechanischen Beanspruchung sind beispielsweise Innenmischer mit ineinander greifenden oder mit tangierenden Rotoren geeignet. Dabei ist ein Innenmischer mit ineinander greifenden Rotoren besonders bevorzugt, da auf diese Weise mehr Scherenergie in die einzelnen Teilchen des Gummivulkanisats eingebracht werden kann.

Auch bei der Durchführung im Innenmischer kann in einer weiteren Ausführungsform des erfindungsgemäßen Verfahrens das Polysulfid nach Formel (1) vor der Zugabe zum Öl, beispielsweise mineralischem Öl, vorzugsweise naphthenischem Öl, zum Bitumen mit einer Viskosität < 1000 cSt, gemessen nach EN 13302 bei 60°C, versetzt werden.

In einer weiteren Ausführungsform des erfindungsgemäßen Verfahrens erfolgt das Zumischen des auf die zuvor beschriebene Art bei Temperaturen von 60 bis 200°C.

Die nach dem erfindungsgemäßen Verfahren hergestellte gummimodifizierte Mischung von Dialkylpolysulfiden der allgemeinen Formel (1) 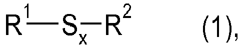 worin
R¹ und R² gleich oder verschieden sind und für einen linearen oder verzweigten C₁-C₁₈-Alkylrest stehen und x für die Zahlen 3 bis 12 steht, mit Bitumen, Gestein, gegebenenfalls Gummigranulaten und/oder Öl findet Anwendung im Hochbau zur Abdichtung von Gebäudeteilen gegen Wasser (Bitumendachbahnen zur Dachabdichtung), Schutz von Stahl gegen Korrosion und im Straßenbau als Bindemittel für die Gesteinskörnungen im Asphalt (Straßenbelag).

In einer weiteren Ausführungsform des erfindungsgemäßen Verfahrens wird die Mischung aus Bitumen und Gestein und mindestens einer Verbindung der Formel (1) 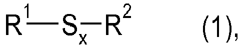 worin
R¹ und R² gleich oder verschieden sind und für einen linearen oder verzweigten C₁-C₁₈-Alkylrest stehen und x für die Zahlen 3 bis 12 steht, zur Herstellung von Flüsterasphalt eingesetzt.

Gegenstand der vorliegenden Erfindung ist zudem die Verwendung von Dialkylpolysulfiden der allgemeinen Formel (1) 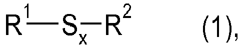 worin
R¹ und R² gleich oder verschieden sind und für einen linearen oder verzweigten C₁-C₁₈-Alkylrest stehen und x für die Zahlen 3 bis 12 steht, zur Adhäsionsverbesserung zwischen Bitumen und Gestein im Asphalt.

Ein weiterer Gegenstand der Erfindung ist zudem die Verwendung einer Mischung von Dialkylpolysulfiden der allgemeinen Formel (1) 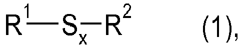 worin
R¹ und R² gleich oder verschieden sind und für einen linearen oder verzweigten C₁-C₁₈-Alkylrest stehen und x für die Zahlen 3 bis 12 steht, Bitumen, Gestein, gegebenenfalls Gummigranulaten und/oder Öl zur Adhäsionsverbesserung zwischen Bitumen und Gestein im Asphalt.

In Bezug auf die Definitionen, Indizes und bevorzugten Ausführungsformen wird auf die obigen Ausführungen verwiesen. Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die vorliegende Erfindung wird anhand der nachfolgenden Beispiele näher erläutert, wobei die vorliegende Erfindung keinesfalls auf die Beispiele beschränkt ist.

### Ausführungsbeispiele:

Es wurden folgende Substanzen eingesetzt:
   - A) Gummigranulat "Fein", ein Styrol-Butadien-Kautschuk (SBR), mit Anteilen an Butadien-Kautschuk (BR) und Naturkautschuk (NR) von der Firma Genan, geschredderte Stücke aus Altreifen mit einem Durchmesser < 2 mm.
   - B) Sehr feines Gummigranulat aus Styrol-Butadien-Kautschuk (SBR), mit Anteilen an Butadien-Kautschuk (BR) und Naturkautschuk (NR) der Firma ART Asamer Rubber Technologie, geschredderte Stücke aus Altreifen mit einem mittleren Durchmesser von < 0,2 mm.
   - DOPS = verzweigtesDioctylpentasulfid,
   - Öl= Shell Flavex 595 = paraffinbasisches Erdölraffinat und
   - Aqualt 70/100 BN = Bitumen des Typs 70/100 (B 80)

**Tabelle 1: Mengenangaben zu den Ansätzen 1 - 4 (%-Angaben in Gew.%)**

| | Ansatz 1 | Ansatz 2 | Ansatz 3 | Ansatz 4 |
|---|---|---|---|---|
| Granulat | 600g A (<2mm) | 600g B (<0,2mm) | 600g B (<0,2mm) | 600g A (<2mm) |
| Prämix mit 40% DOPS 60% Öl | 90 g | 90 g | - | - |
| Öl | - | - | - | - |
| Bitumen | 3300 g | 3300 g | 3300 g | 3300g |
| Anteil DOPS [%], bez. auf die Summe aus Prämix, Öl, Gummigranulat und Bitumen | 0,9 | 0,9 | - | - |

Allgemeine Herstellvorschrift für die Ansätze 1 bis 4. Die entsprechenden Mengenangaben befinden sich in Tabelle 1:
Für die Ansätze 1 und 2 wurde das Granulat im Asphalt-Mischer BPS, Typ GZM-12+ vorgelegt und auf 120-130°C erwärmt. Dann wurden unter Rühren mit 60 U/min innerhalb 31 min die in Tabelle 1 angegebenen Menge an Prämix bzw. Öl zugetropft. Das Gummigranulat blieb fließfähig, es war etwas klebrig und es gab eine geringe Agglomeratbildung.

Im Mischbehälter für die Ansätze 1 und 2 befanden sich 690g behandeltes und bei den Ansätzen 3 und 4 600 g unbehandeltes Gummigranulat. Es wurden ca. 3300 g Bitumen des Typs 70/100 (B 80) (Aqualt 70/100 BN) zugegeben für eine Ansatzgröße von ca. 4 kg.

Anschließend wurde auf 180°C erwärmt und 2 h mit 60 U/min weiter gerührt. Die Erwärmung von 130 auf 180°C benötigte mehr als 30 min; nach 30 min wurde bei einer Starttemperatur von 170°C die Zeit von 2 h für das Rühren bei 180°C gestartet.

Nach dem Rühren bei 180°C wurde die Bitumenmischung in Tuben für den Tubentest DIN EN 13399) und eine 10 I Blechbüchse gegossen.

Austestung der Bitumenmischungen aus den Ansätzen 1 bis 4:
Die so hergestellten Bitumenmischungen wurden hinsichtlich der Affinität zwischen grober Gesteinskörnung (Andesit 8/11 mm von Baumholder; Rheinland-Pfalz) und Bitumen gemäß der neuen Norm DIN EN 12697-11:2012 (Prüfverfahren für Heißasphalt, Teil 11: Bestimmung der Affinität von Gesteinskörnungen und Bitumen, Ausgabe 2012) und der TP Asphalt -StB, Teil 11: Haftverhalten zwischen Gestein und Bitumen, Ausgabe 2012 untersucht.

Angaben zur Durchführung der Messung:
Rotationsgeschwindigkeit: 60 min -1; Mischtemperatur: 175°C; Rohdichte: 2,718g/cm³, keine Klumpenbildung, bei 3 Beobachtern/Prüfern.

Für die Prüfung der Affinität wird ein Verhältnis Bitumen/ Gesteinskörnungen von 16 g/ 500 g gewählt.

Die Ergebnisse sind in der nachstehenden Tabelle zusammengefasst:

| Ansatz | Erfindungsgemäß (erf)/ Vergleich (V) | Mittlerer Grad der Umhüllung in % nach 6 h | Mittlerer Grad der Umhüllung in % nach 24 h |
|---|---|---|---|
| 1 | Erf | 90 | 60 |
| 2 | Erf | 95 | 75 |
| 3 | V | - | - |
| 4 | V | 85 | 35 |

Aus den Ergebnissen ist klar ersichtlich, dass der Anforderungen der Norm an eine Asphaltmischung, nur von den erfindungsgemäßen Mischungen erfüllt werden, da dort die Gesteinsbrocken nach 24 Stunden noch zu mindestens 60 % von Bitumen bedeckt waren.

Der Effekt der Affinitätsverbesserung trat auch ein, als das Prämix aus Alkylpolysulfid und Shell Flavex 595 nicht wie in Ansatz 1 zum Gummigranulat (mit anschließendem Tempern) zugegeben wurde, sondern auch als das Prämix zur fertigen Gummigranulat/Bitumen-Mischung hinzugegeben wurde. So ergab die nachträgliche Zugabe von 2,25 % Prämix (entspricht 0,9 % Alkylpolysulfid) zu dem fertig gemischten Ansatz 4 unter Rühren bei 150°C eine Verbesserung des mittleren Grades der Umhüllung nach 24 h gemäß DIN EN 12697-11:2012 von 35 % (ohne Dioctylpentasulfid) auf 65 % (mit Dioctylpentasulfid).

Auch in nicht-gummimodifiziertem Bitumen können Alkylpolysulfide des erfindungsgemäßen Typs die Affinität zum Gestein verbessern. Der Effekt ist allerdings weniger ausgeprägt als bei gummimodifiziertem Bitumen.

So ergab Bitumen des Typs 70/100 ohne Zugabe eines Additivs oder Öls in dem Affinitätstest gemäß Norm DIN EN 12697-11:2012 einen mittleren Bedeckungsgrad von 30 %. Die Zugabe von 0,9 % Dioctylpentasulfid steigert diesen auf 35 %; die Zugabe von 0,9 % A Dioctylpentasulfid, gelöst in Shell Flavex 595 (Zugabe Lösung 1,4 %), steigert den mittleren Bedeckungsgrad des Bitumens auf 40 %.

## Patentansprüche

1. Verfahren zur Adhäsionsverbesserung zwischen Bitumen und Gestein im Asphalt, **dadurch gekennzeichnet, dass** Dialkylpolysulfide der allgemeinen Formel (1) 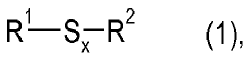 dem Bitumen und/oder Gestein zugegeben werden , worin
R¹ und R² gleich oder verschieden sind und für einen linearen oder verzweigten C₁-C₁₈-Alkylrest stehen und x für ganze Zahlen 3 bis 12 steht.

2. Verfahren nach Anspruch 1, **dadurch gekennzeichnet, dass** die Dialkylpolysulfide in mindestens einem mineralischem Öl gelöst eingesetzt werden.

3. Verfahren nach Anspruch 2, **dadurch gekennzeichnet, dass** das Verhältnis von Öl zu Dialkylpolysulfid 9:1 bis 3:7, vorzugsweise 7:3 bis 1:1 beträgt.

4. Verfahren nach einem der Ansprüche 1 bis 3, **dadurch gekennzeichnet, dass** der Anteil an Dialkylpolysulfid 0,1 und 3 % Gew.%, bevorzugt bis 1 Gew.%, besonderes bevorzugt 0,5 bis 1 Gew.-%, jeweils bezogen auf die Summe aller Bestandteile des Asphaltmischung, beträgt.

5. Verfahren nach einem der Ansprüche 1 bis 4, **dadurch gekennzeichnet, dass** man als Dialkylpolysulfid verzweigtes Dioctylpentasulfid oder Dioctyltetrasulfid einsetzt.

6. Verfahren nach einem der Ansprüche 1 bis 5, **dadurch gekennzeichnet, dass** zusätzlich Gummigranulate zugemischt werden.

7. Verfahren nach Anspruch 6, **dadurch gekennzeichnet, dass** es sich bei den Gummigranulaten um vernetzte Kautschuke umfassend Naturkautschuke (NR), Butadien-Kautschuke (BR), Styrol-Butadien-Kautschuke (SBR), Acrylnitril-Butadien-Kautschuke (NBR) und Butylkautschuke (IIR), und/oder um Vulkanisate, umfassend Ethylen-Propylen-Dien-Kautschuk (EPDM), handelt.

8. Verfahren nach Anspruch 6 oder 7, **dadurch gekennzeichnet, dass** der Anteil an Gummigranulaten 5 bis 20 Gew.-%, bevorzugt 5-15% Gew.-%, bezogen auf die Gesamtmischung, beträgt.

9. Verfahren nach Anspruch 6, **dadurch gekennzeichnet, dass** die Gummigranulate eine Teilchengröße von 0,01 mm bis 4 mm, bevorzugt von 0,2 bis 4 mm aufweisen.

10. Verfahren nach einem der Ansprüche 1 bis 9, **dadurch gekennzeichnet, dass** zusätzlich unvernetzte Thermoplaste ausgewählt aus der Gruppe der Polyethylen (PE), Polypropylen (PP), insbesondere ataktisches Polypropylen (aPP), Polyvinylchlorid (PVC), Polystyrol (PS), Ethylen-Vinylacetat- (EVA), Ethylen-Methylacrylat- (EMA), Ethylen-Butylacrylat-Copolymer (EBA), Polyvinyl-chlorid (PVC), Polystyrol (PS) und/oder Thermoplastische Elastomere (TPE) wie z. B. Styrol-Butadien-Styrol- (SBS), Styrol-Isopren-Styrol- (SIS), Styrol-Ethylen-Butadien-Styrol- Blockcopolymere (SEBS) und/oder unvernetzte Kautschuke auf Basis von Polydienen, umfassend Naturkautschuke (NR), Butadien-Kautschuke (BR), Styrol-Butadien-Kautschuke (SBR), Acrylnitril-Butadien-Kautschuke (NBR), und Butylkautschuke (IIR), Isobuten-Isopren-(IIR)Ethylen-Propylen-Dien- (EPDM), Ethylen-Vinylacetat- (EVA) Kautschuk, Polyethylen-Bitumen- Copolymer (ECB), Polyoctenamer-Kautschuk (TOR), Isopren- (IR), Polychloropren- (CR), Acrylat- (ACM), Ethylen-Acrylester-Kautschuk (AEM), und/oder Duroplaste wie vernetzte Polyepoxide (EP), Polyurethane (PUR) und Ungesättigte Polyester (UP), Phenolharze eingesetzt werden.

11. Verfahren nach einem der Ansprüche 1 bis 10, **dadurch gekennzeichnet, dass** zusätzlich weitere Additive, ausgewählt aus der Gruppe der organischen Zinkverbindungen/-salze in Mengen bis zu 1 Gew.-% hinzugefügt werden.

12. Verfahren nach einem der Ansprüche 1 bis 11, **dadurch gekennzeichnet, dass** die Mischung enthaltend Bitumen, Gestein und gegebenenfalls Gummigranulaten und/oder Öl und mindestens einer Verbindung der Formel (1) 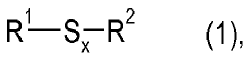 worin
R¹ und R² gleich oder verschieden sind und einen linearen oder verzweigten C₁-C₁₈-Alkylrest stehen und x für ganze Zahlen 3 bis 12 steht, als Flüsterasphalt eingesetzt wird.

13. Verwendung von Dialkylpolysulfiden der allgemeinen Formel (1) 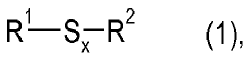 worin
R¹ und R² gleich oder verschieden sind und für einen linearen oder verzweigten C₁-C₁₈-Alkylrest stehen und x für die Zahlen 3 bis 12 steht, zur Adhäsionsverbesserung zwischen Bitumen und Gestein im Asphalt.

14. Verwendung einer Mischung von Dialkylpolysulfiden der allgemeinen Formel (1) 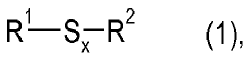 worin
R¹ und R² gleich oder verschieden sind und für einen linearen oder verzweigten C₁-C₁₈-Alkylrest stehen und x für die Zahlen 3 bis 12 steht, Bitumen, Gestein, gegebenenfalls Gummigranulaten und/oder Öl zur Adhäsionsverbesserung zwischen Bitumen und Gestein im Asphalt.
